## Europäisches Patentamt
## European Patent Office
## Office européen des brevets

(19)

(11) Numéro de publication: **0 030 906**
**A1**

(12) # DEMANDE DE BREVET EUROPEEN

(21) Numéro de dépôt: **80420142.4**

(22) Date de dépôt: **12.12.80**

(51) Int. Cl.³: **B 60 L 5/14**
**B 60 L 5/16, B 60 L 5/08**

(30) Priorité: **14.12.79 FR 7931190**
**04.12.80 FR 8026142**

(43) Date de publication de la demande:
**24.06.81 Bulletin 81/25**

(84) Etats Contractants Désignés:
**AT BE CH DE GB IT LI LU NL SE**

(71) Demandeur: **Etablissements André BARDET S.A.**
**(société anonyme)**
**89 - 91 rue des Chantereines**
**F-93100 MONTREUIL-sous-BOIS(FR)**

(72) Inventeur: **Brignon, François**
**12, rue Detaille**
**F-93250 Villemomble(FR)**

(74) Mandataire: **Buttet, Roger et al,**
**"Cabinet Charras" 3, Place de l'Hôtel-de-Ville**
**F-42000 Saint-Etienne(FR)**

(54) **Ensemble de prise de courant à déperchage et reperchage automatiques pour véhicules à traction électrique, notamment les trolleybus.**

(57) Les prises de courant connues n'autorisent pas une commande en rotation de la perche, pour assurer en combinaison avec sa remontée, le reperchage depuis l'intérieur du véhicule; ces prises de courant sont établies avec des têtes de perche porte-frotteurs et frotteurs n'assurant pas un guidage parfait sur le câble aérien.

L'ensemble de prise de courant selon l'invention remédie à ces inconvénients par l'intermédiaire d'un dispositif de commande en rotation de la perche (9) lors de sa remontée vers le câble aérien (f); d'une tête à frotteur (25) (53) en matiere souple ou rigide avec porte-frotteur articulé à joues symétriques ou dissymétriques et moyen de fixation amovible du frotteur (31), en deux parties indépendantes (31¹) (31²), dimensionné avec fixation souple longitudinalement; d'un moyen de commande lors du reperchage pour l'orientation du porte-frotteur dans l'axe du câble (f) par l'intermédiaire d'un guidon de visée (86).

./...

Croydon Printing Company Ltd.

FIG.2

- 1 -

Ensemble de prise de courant à déperchage et reperchage automatiques pour véhicules à traction électrique, notamment les
trolleybus.

L'invention concerne un ensemble de prise de courant à déperchage et reperchage automatiques pour véhicules à traction
électrique, notamment les trolleybus.

On connait des prises de courant correspondant au préambule
de la revendication 1 (Brevet Allemand 1.036.905), comprenant
une plateforme se fixant axialement sur le toit du véhicule,
avec des axes verticaux respectivement pour la libre rotation
d'un support sur lequel est montée la base de la perche avec
moyen de rappel par ressort à boudins sur le câble aérien et
vérin dont la mise en pression assure l'abaissement de la perche et son centrage suivant l'axe du véhicule.

On connait également des dispositifs (Brevet Français 1.062.348)
comprenant un moyen pneumatique accouplé à la perche dont les
variations de pressions produites sous l'effet d'un déplacement
accidentel de ladite perche, agissent électriquement sur des
organes pour commander des circuits électriques,en vue d'autoriser l'abaissement de la perche en cas de déperchage ou de
manque de tension sur le câble aérien.

De tels prises de courant n'autorisent pas une commande en
rotation de la perche, pour assurer en combinaison avec sa
remontée, le reperchage de l'intérieur du véhicule. De plus,
ces prises de courant sont établies avec des têtes de perche

porte-frotteurs et frotteurs, n'assurant pas un guidage parfait sur le câble aérien, avec risques de déperchage fréquents et absence de moyens autorisant, de l'intérieur du véhicule, l'orientation du porte-frotteur dans l'axe du câble aérien, quel que soit le positionnement angulaire de la perche par rapport au véhicule.

La présente invention a pour but de remédier à ces inconvénients.

L'invention telle qu'elle est caractérisée dans les revendications, résout le problème consistant à créer un ensemble de prise de courant à déperchage et reperchage automatiques, notamment pour trolleybus, par l'intermédiaire d'un dispositif de commande par vérin auxiliaire et moteur avec moyen d'embrayage pour la commande en rotation de la perche, lors de sa remontée vers le câble aérien, en vue d'un reperchage; d'une tête à. frotteur, éventuellement en matière souple, avec porte-frotteur articulé, à joues symétriques ou dissymétriques et déséquilibre de masse et moyen de fixation amovible du frotteur en deux éléments avec fixation souple longitudinalement ; des frotteurs dimensionnés ; d'un dispositif de commande en rotation de la perche, en vue de son centrage dans l'axe du véhicule lors de l'abaissement de cette dernière, après déperchage; d'un moyen de commande lors du reperchage, pour l'orientation du porte-frotteur dans l'axe du câble aérien et quel que soit le positionnement de ladite perche, par l'intermédiaire d'un guidon de visée et de centrage escamotable commandé à distance.

Ces caractéristiques et d'autres ressortiront bien de la suite de la description.

Pour fixer l'objet de l'invention, sans toutefois le limiter, aux figures des dessins annexés :

La figure 1 est à petite échelle, une vue en perspective d'un véhicule à traction électrique à perches ou trolleybus, coopérant avec une ligne aérienne d'alimentation.

La figure 2 est à plus grande échelle, une vue extérieure d'un ensemble de prise de courant électrique par perches, réalisé selon l'invention, dans le cas normal d'alimentation et de déplacement du véhicule.

La figure 3 est une vue de dessus, correspondant à la figure 2. Le tracé en traits interrompus illustre le pivotement horizontal de la perche.

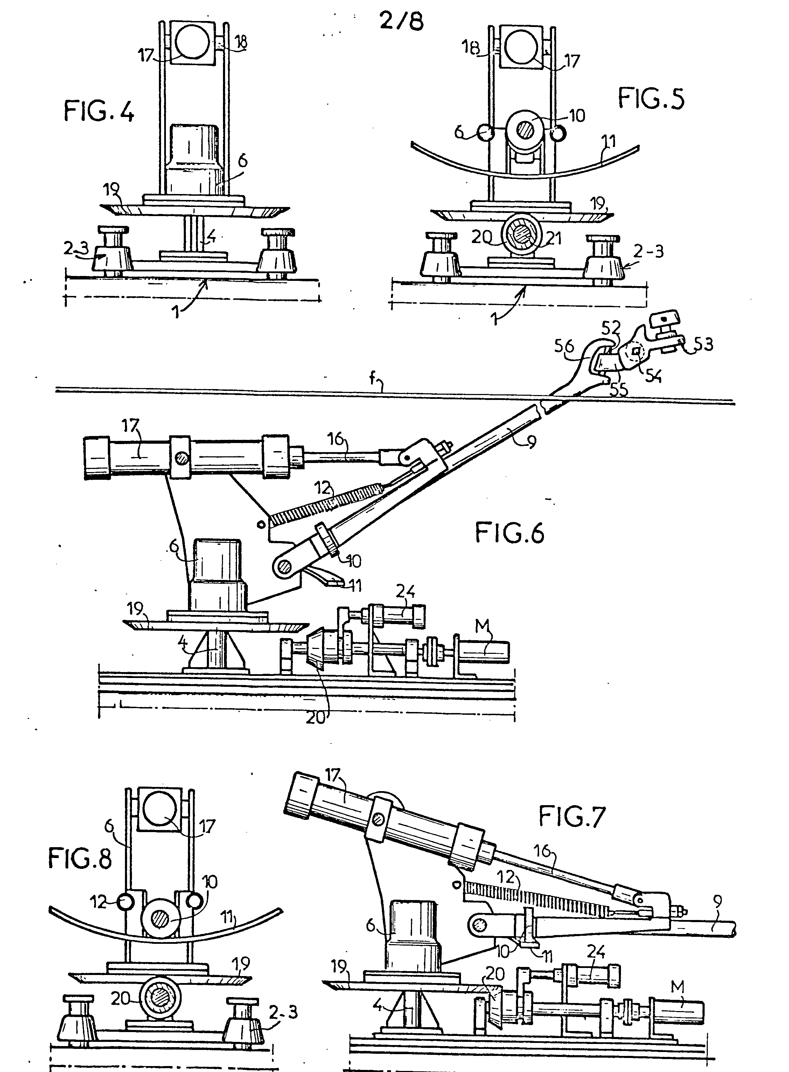

La figure 4 est une vue extérieure, de profil, correspondant à la figure 2.

La figure 5 est une vue en coupe transversale suivant l'axe 5-5 de la figure 2.

La figure 6 est une vue semblable à la figure 2, mais dans le cas de déperchage inopiné.

La figure 7 est une vue semblable à la figure 6, mais la perche est abaissée et centrée axialement sur le toit du véhicule. Le dispositif de commande de la rotation de ladite perche est représenté en position embrayée.

La figure 8 est une vue extérieure de profil,correspondant à la figure 7.

La figure 9 est à plus grande échelle, une vue de face en coupe longitudinale, d'une tête à frotteur avec porte-frotteur monté sur des axes d'articulation horizontal et vertical, la dite tête étant obtenue par moulage d'une matière souple avec câble inséré, en vue de permettre sa flexion par rapport à la perche.

La figure 10 est une vue en coupe suivant la ligne 10-10 de la figure 9.

La figure 11 est une vue en coupe suivant la ligne 11-11 de la figure 9.

La figure 12 est une vue de dessus correspondant à la figure 9.

La figure 12a est une vue en perspective de l'extrémité supérieure d'un porte-frotteur.

La figure 13 est à plus grande échelle, une vue de face en coupe longitudinale d'une tête à frotteur avec porte-frotteur à articulation sphérique.

La figure 13a est une vue partielle en coupe transversale, suivant la ligne 13-13 de la figure 13.

La figure 14 est une vue de profil correspondant à la figure 13.

La figure 15 est une vue de profil correspondant à la figure 13, mais suivant le côté opposé.

La figure 16 est une vue en coupe transversale suivant la ligne 16-16 de la figure 13.

La figure 17 est une vue extérieure de face, correspondant à la figure 13.

Les figures 18 - 19 sont des exemples nullement limitatifs de schémas électriques de principe de puissance, pour le fonctionnement de l'ensemble de prise de courant selon l'invention.

Les figures 20 et 21 sont des schémas illustrant le poste de commande pour la manoeuvre automatique des perches, notamment en vue du reperchage.

Les figures 22 et 23 sont respectivement des variantes apportées aux schémas électriques de puissance de la figure 18.

La figure 24 est une vue extérieure de face d'une tête à frotteur avec inserts métalliques articulés et enrobés d'une matière souple profilée, ladite tête étant représentée munie de son porte-frotteur.

La figure 25 est une vue partielle de dessus correspondant à la figure 24. Le porte-frotteur n'étant pas représenté.

La figure 26 est une vue en coupe longitudinale correspondant à la figure 24. Le porte-frotteur n'étant pas représenté.

La figure 27 est une vue de dessus de l'insert seul, correspondant à la figure 26.

La figure 28 est une vue en coupe transversale selon la ligne 28-28 de la figure 26.

La figure 29 est une vue partielle en coupe transversale, suivant la ligne 29-29 de la figure 24.

La figure 30 est une vue partielle en coupe longitudinale illustrant une fixation en variante des éléments du frotteur sur le porte-frotteur.

La figure 31 est une vue de face d'un moyen de centrage de la perche suivant l'axe du véhicule, en cas de déperchage, et monté sur l'ensemble de prise de courant électrique.

La figure 32 est une vue extérieure en plan suivant la ligne 32-32 de la figure 31.

Les figures 33 et 34 sont des vues purement schématiques, illustrant les positions extrêmes de rotation de la perche, en vue de son rappel en position axiale par le moyen de centrage.

La figure 35 est une vue partielle de face, d'un moyen de centrage de la perche suivant une autre réalisation.

La figure 36 est une vue de dessus correspondant à la figure 35.

La figure 37 est une vue de face du moyen de commande d'orientation et de positionnement du porte-frotteur , lors du reperchage, et dans la position d'engagement du guidon sur le câble aérien.

La figure 38 est une vue partielle de profil correspondant à la figure 37.

La figure 39 est une vue semblable à la figure 37, mais le guidon est représenté en position basse de verrouillage en rotation.

La figure 40 est une vue de dessus et en coupe, suivant la ligne 40-40 de la figure 39.

La figure 41 est une vue de dessus et en coupe, suivant la ligne 41-41 de la figure 37, et illustrant l'engagement des doigts sur la chape porte-frotteur, en vue de son accouplement en rotation.

La figure 42 est une vue semblable à la figure 41, mais lors du désaccouplement de la chape porte-frotteur par le dégagement des doigts, lorsque le guidon est en position basse.

Selon la présente invention et dans les exemples nullement limitatifs illustrés aux dessins, cet ensemble de prise de courant comporte essentiellement suivant chaque perche, une plateforme métallique 1 fixée axialement et longitudinalement sur le toit du véhicule, par l'intermédiaire d'isolateurs 2 et d'amortisseurs 3, pour la fixation d'un axe 4 sur lequel tourne librement, au moyen de roulements à billes 5, une chape-support 6, verticale, dont la base arrière permet l'articulation autour d'un axe fixe 7 d'un fourreau 8 destiné au montage de l'extrémité de la perche 9. Ce fourreau 8 reçoit en outre, un galet 10 librement rotatif, qui coopère avec une piste inclinée 11, pour autoriser le positionnement axial de la perche 9, lors de son abaissement.

Chaque perche 9 munie à son extrémité libre d'une tête à frotteur pour coopérer avec le câble aérien, est rappelée en permanence vers le haut, par l'intermédiaire de ressorts à boudins 12 intercalés en tension entre un axe d'accrochage 13 solidaire de la chape-support 6 et du côté opposé, un palonnier réglable 14, fixé sur un support 15 faisant corps avec l'extrémité du fourreau 8.

Le support 15 autorise en outre, l'accouplement de la tige 16 d'un vérin pneumatique dont le fût 17, logé dans la partie supérieure de la chape-support 6, s'articule librement par l'intermédiaire de ses axes transversaux 18, de manière à suivre les déplacements verticaux de la perche 9.

Il faut noter que la disposition du vérin 16 est telle que sa masse tend à équilibrer l'ensemble pivotant par rapport à l'axe fixe 4, principalement pendant les virages du véhicule, en évitant les déperchages dus à une accélération radiale.

La chape-support 6 est rendue solidaire à sa base, d'une couronne conique 19, lisse, qui tourne également autour de l'axe fixe 4, de manière à coopérer avec une roue conique 20 dont la périphérie est revêtue d'une garniture de friction.

Un arbre 21 supporté par des paliers 22 solidaires de la plate-forme 1, autorise l'entraînement en rotation de la roue 20 tout en permettant son libre coulissement longitudinal pour être en contact ou non avec la couronne conique 19, en vue de son accouplement. Ce coulissement de la roue 20 s'effectue par l'intermédiaire d'une fourchette 23 engagée dans une gorge $20^1$ et montée en bout de la tige du vérin 24.

L'arbre 21 est accouplé à un moteur M électrique (pneumatique ou hydraulique) à vitesse réduite, fixé sur la plateforme 1, avec une possibilité d'entraînement en rotation dans les deux sens.

Selon cette disposition, l'on conçoit que le fonctionnement du moteur M entraîne l'arbre 21, et par suite, lors de l'embrayage de la couronne 19 par rapport à la roue 20 par l'action du vérin 24, la chape support 6, en vue de la commande en rotation dans un plan horizontal de la perche 9, pour assurer le reperchage par rapport au câble aérien.

Dans le cadre d'une première réalisation en variante, la roue 20 et la couronne conique 19 sont dentées pour engréner en permanence, tandis qu'un coulisseau entraîné en rotation par l'arbre 21, mais libre en déplacement longitudinal, présente son nez conique muni d'une garniture de friction, dans un alésage correspondant établi en bout de la roue 20, lors de l'embrayage obtenu de la même façon que précédemment, par l'action du vérin 24 et de la fourchette 23.

Une deuxième variante consiste à accoupler directement le moteur M sur la roue 20. Le rotor du moteur tourne alors librement, lors des oscillations du dispositif de perche qui suit le profil de la ligne aérienne, lorsque ledit moteur n'est pas alimenté en énergie. L'alimentation du moteur se fait progressivement, soit par tension croissante ou pression croissante, la vitesse de rotation est donc croissante depuis 0 jusqu'à un maximum, ce qui permet de reproduire une action sensible de l'opérateur sur une manette au cours de l'approche de la tête vers le câble aérien.

On note également qu'un réducteur de vitesse, non représenté, est avantageusement intercalé entre le moteur M et le moyen d'embrayage de la couronne 19. Ce réducteur de vitesse autorise outre une faible vitesse de la commande en rotation, l'irréversibilité du mouvement en cas d'arrêt d'alimentation dudit moteur M.

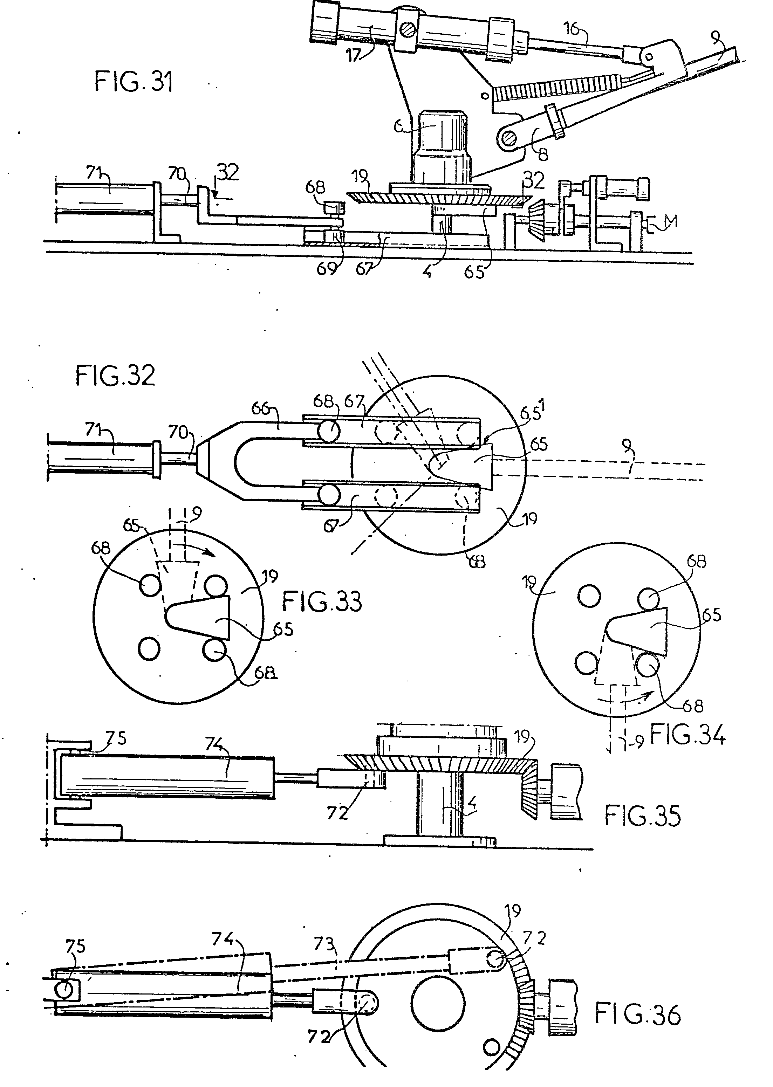

Un dispositif de commande et de rappel en rotation de la perche en position axiale, depuis l'intérieur du véhicule, pour le reperchage et lors du rabaissement de cette dernière, est également prévu selon l'invention et comporte selon la figure 31, une came 65 fixée radialement ou formée par la face inférieure de la couronne 19.

Cette came 65, de profil symétrique en forme de V, est disposée longitudinalement dans l'axe de la perche 9 pour être sollicitée et rappelée suivant l'axe du véhicule, au moyen d'un tiroir ou étrier mobile 66 monté à libre coulissement axial sur des guides fixes 67 solidaires du toit du véhicule.

Cet étrier 66 en forme de fourche comporte à cet effet, des galets ou roulements 68 - 69 disposés verticalement et symétriquement en bout de ses branches pour coopérer d'une part avec les guides 67, et d'autre part avec les faces latérales

opposées 65¹ de la came 65, en vue de la commande en rotation de la couronne 19 par le rappel de la came 65 en position rigoureusement axiale quelle que soit son orientation angulaire (et par suite, celle de la perche 9), dans un sens ou dans l'autre.

Il faut considérer que l'étrier 66 est accouplé à l'avant, à l'extrémité du piston 70 d'un vérin 71 fixé longitudinalement et axialement sur le toit du véhicule et mis en pression simultanément avec le vérin 17, de manière à permettre en combinaison et simultanément, le rabattement de la perche 9 vers le bas et son orientation et positionnement axial en fin de course.

Cette réalisation permet ainsi de par le rappel arrière de l'étrier 66, de le désolidariser de la couronne 19 pour assurer une souplesse de rotation de l'ensemble porte-perche. De plus, l'étrier 66 permet le rappel axial de la came 65 suivant un angle très important, comme illustré figures 33 et 34. Enfin, les galets supérieurs 68 agissent simultanément sur les faces opposées de la came 65 en évitant ainsi tout balancement circulaire de la perche 9, lors de sa rotation.

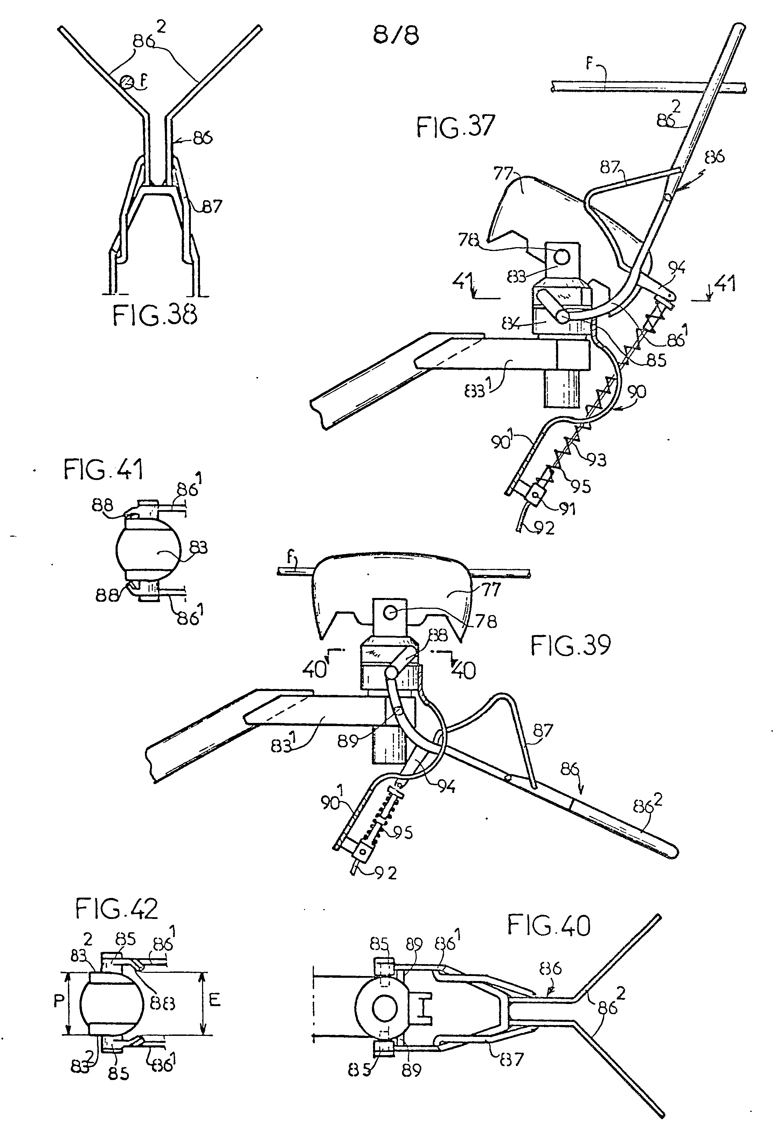

Dans la réalisation en variante, illustrée figures 35 et 36, du dispositif, la couronne 19 est accouplée par l'intermédiaire d'un axe 72, à l'extrémité du piston mobile 73 d'un vérin 74 articulé en 75, en position axiale, directement sur le toit du véhicule. Le déplacement linéaire du piston 73 autorisant le déplacement circulaire de la couronne 19 dans un sens ou dans l'autre, et le rappel de la perche 9 en position axiale correspondant à l'alignement des axes 4, 72 et 75. Comme précédemment, le vérin 74 est mis en pression simultanément avec le vérin 17.

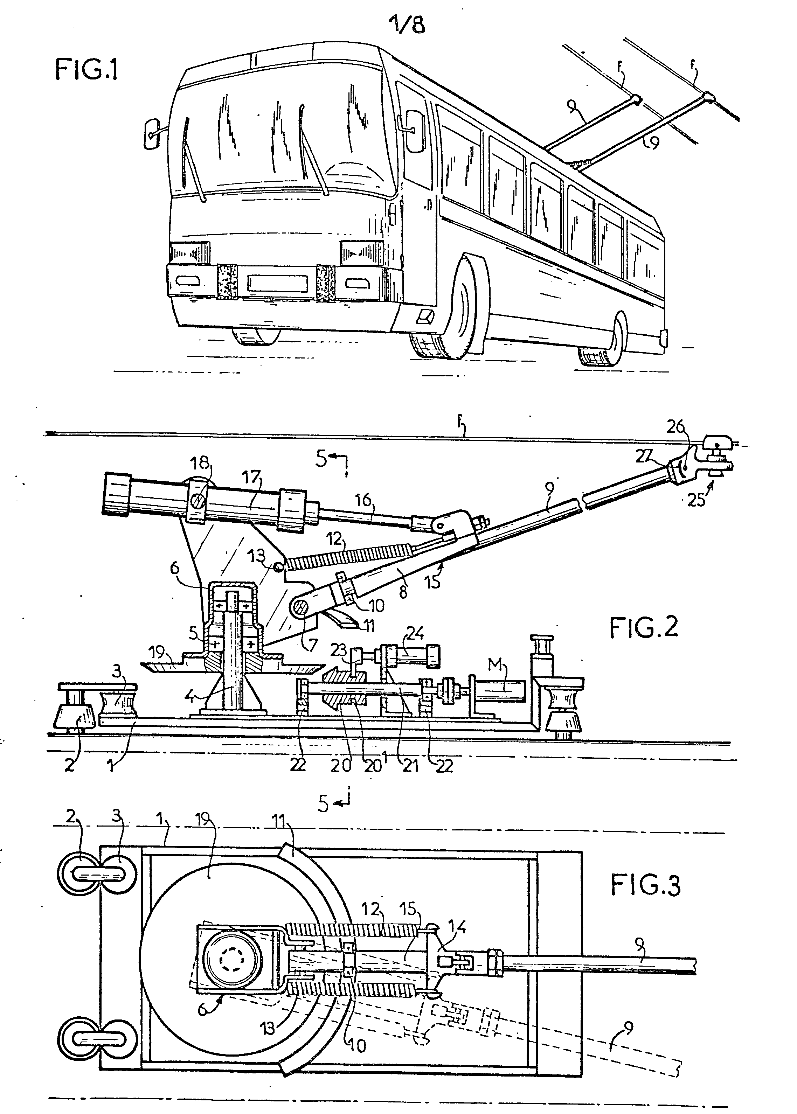

La perche 9 supporte à son extrémité, une tête à frotteur 25 articulée autour d'un axe 26 avec un amortisseur intercalaire 27, interchangeable, de dureté réglable, destiné à absorber élastiquement les vibrations et efforts entre les deux pièces, en vue d'une souplesse de coulissement sur la ligne aérienne, compte tenu de son profil et de ses défauts de dressage, comme illustré figure 2.

Selon une réalisation en première variante illustrée figure 6, la tête à frotteur 53 est montée également à articulation autour d'un axe 54, avec un amortisseur intercalaire interchangeable, sur un support 55. Ce dernier est également monté à articulation de par sa partie avant, sur un axe 52 disposé dans un plan vertical, mais avec une inclinaison par rapport à l'extrémité formant chape 56, de la perche 9. Cette disposition a pour but de réduire les effets parasites dus aux lacets et aux virages.

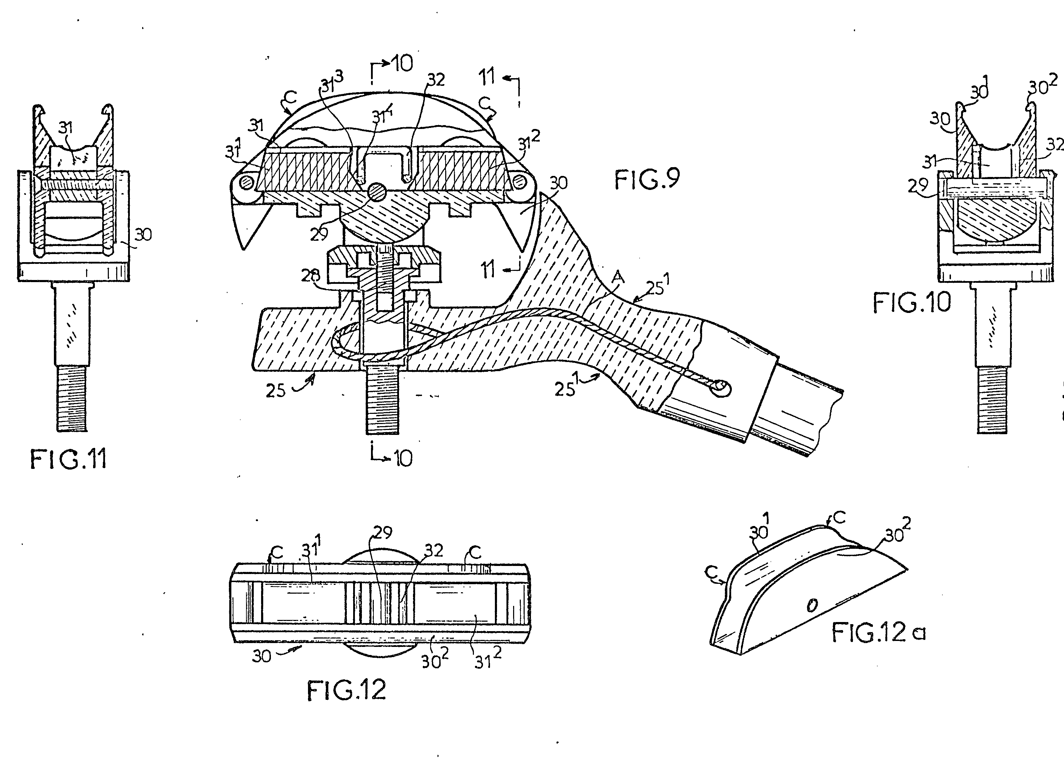

Selon une réalisation en deuxième variante illustrée figure 9, la tête à frotteur 25 est monobloc et en matière souple suffisamment résistante telle que du plastique polyuréthane, et forme au droit de sa section utile, une épaisseur amincie et élargie en $25^1$ pour autoriser le fléchissement et l'effet amortisseur des perturbations dynamiques. Un câble d'acier A (chaînette ou autre), est en outre inséré dans la matière souple pour éviter, en cas de rupture accidentelle, la chûte du morceau rompu.

Selon une réalisation en troisième variante de la tête à frotteur, les articulations d'axes 26 et éventuellement 52, avec respectivement la tête 53 et le support 55 et la chape 56 et le support 55, sont établies avec un faible dimensionnement pour être extérieurement enrobées d'une matière souple telle du polyuréthane, dont l'épaisseur est fonction des efforts appliqués.

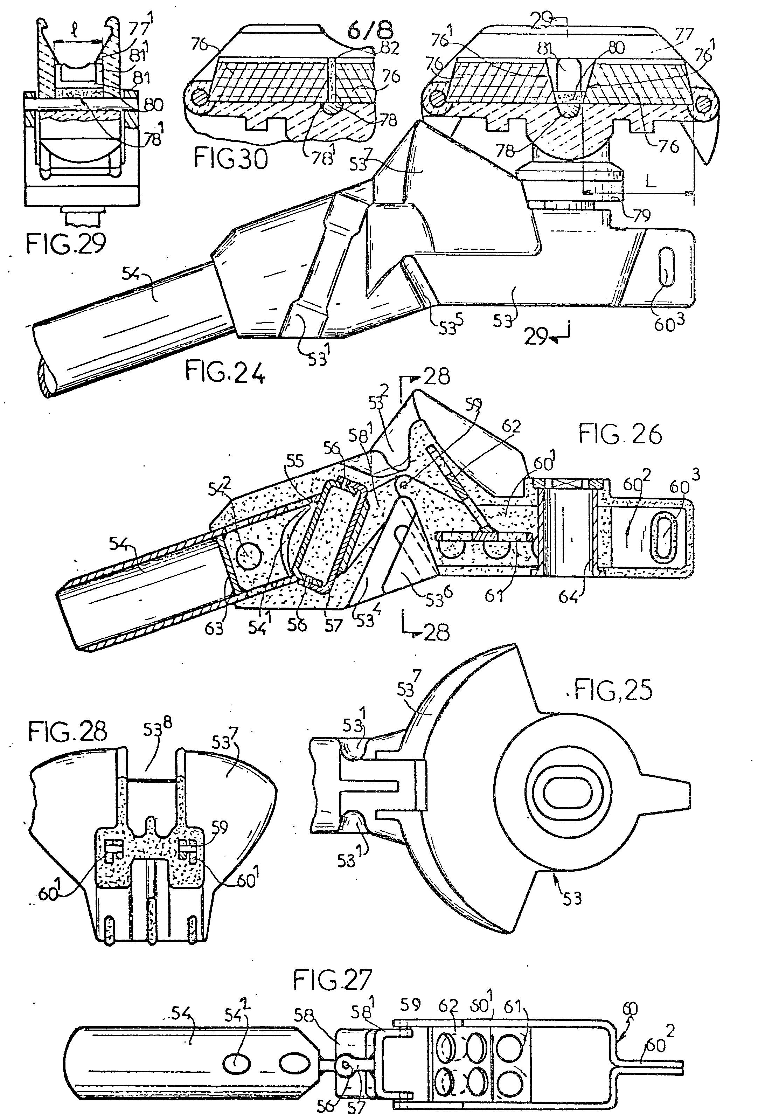

Une quatrième variante est illustrée figures 24, 25, 26, 27 et 28, où la tête à frotteur 53 reçoit intérieurement, lors du moulage de la matière souple, des inserts métalliques fonctionnels et articulés entre-eux, dont les formes et articulations se combinent avec des profils amincis du revêtement afin d'assurer par déformation et flexion combinées, l'effet d'amortisseur tant horizontal que vertical.

A cet effet, un tube extrême 54 destiné à recevoir l'extrémité de la perche, reçoit axialement en bout, une chape 55 disposée verticalement mais angulairement, dont les branches de largeur réduite, autorisent simultanément au moyen d'axes alignés 56, l'articulation dans un plan vertical d'une fourchette superposée 57 fixée axialement par soudure ou autrement, sur la face extérieure d'un support 58 en U à branches $58^1$ déportées vers le haut et de grande largeur.

Les parties supérieures des branches $58^1$ reçoivent des axes horizontaux 59 pour l'articulation des extrémités des branches profilées $60^1$ d'un étrier 60 formant en bout une patte axiale débordante $60^2$ munie d'une ouverture oblongue et verticale $60^3$. Les branches latérales $60^1$ de l'étrier 60 sont en outre reliées par une entretoise 61 solidaire d'une plaque verticale 62 disposée angulairement.

Il faut considérer que les branches $60^1$ de l'étrier 60, ainsi que l'entretoise 61 et la plaque 62, sont munies d'ouvertures de grand diamètre pour autoriser le libre engagement intérieur de la matière souple, lors du moulage. De la même façon, l'extrémité du tube 54 forme de larges dégagements $54^1$ et des ouvertures $54^2$ pour la pénétration de la matière jusqu'à une cloison 63.

Après moulage, la matière enrobe extérieurement et intérieurement les inserts métalliques 54 - 55 - 57 - 58 - 60, tout en constituant extérieurement un profil judicieusement combiné avec les articulations et sections desdits inserts, en vue de permettre les articulations tout en les renforçant.

A cet effet, au droit de l'articulation verticale définie par les axes 56 et en regard des branches de la fourchette 57, la section transversale de la tête 53 forme latéralement deux dégagements opposés et profilés $53^1$ disposés obliquement, tandis qu'au droit de l'articulation horizontale formée par les axes 59, la tête 53 forme en hauteur deux dégagements en forme de cavités $53^2$ et $53^4$ dont un dégagement inférieur avec côtés latéraux présentant des fentes $53^5$ et une âme axiale de butée $53^6$ pour permettre autour des axes précités 59, une flexion horizontale limitée en amplitude de la partie arrière de la tête supportant le porte-frotteur. Il

0030906

faut considérer également qu'au droit de la plaque verticale 62, la tête 53 forme de par son enrobage, un profil supérieur proéminent $53^7$, arrondi en forme de secteur sphérique et destiné à assurer la protection avant des porte-frotteurs en cas de choc frontal. Ledit profil $53^7$ formant en outre axialement, une entaille $53^8$ autorisant une légère course supplémentaire en hauteur de la tête, dans le cas de fil conducteur très bas, sous les ponts par exemple. On remarque également que l'étrier 60 autorise entre ses branches, le logement axial du fourreau vertical 64 inséré extérieurement dans la matière souple et destiné à supporter à articulation le porte-frotteur.

Selon la réalisation des figures 9, 10, 11, 12 et 12a, la tête à frotteur en matière souple ou non, comme indiqué ci-avant, reçoit un axe vertical 28 monté à libre rotation sur roulements appropriés dont la partie supérieure formant chape autorise l'engagement d'un axe transversal et horizontal 29, en vue de la libre articulation dans un plan vertical,d'un porte-frotteur 30. Ce dernier reçoit intérieurement le frotteur rectiligne 31.

Le porte-frotteur 30 articulé sur l'axe horizontal 29 qui se situe très près de la zone de frottement en vue d'éliminer pratiquement l'effet de cabrage, est établi avec des joues verticales opposées $30^1$ - $30^2$ pentées, en forme de V, suivant toute leur longueur, de manière à permettre un auto-centrage du frotteur 31 lors de sa mise en place sur le câble aérien f.

Ces joues $30^1$ - $30^2$ sont en outre convexes suivant leurs sommets pour permettre, lors de la mise en pression verticale du câble f, l'obtention d'un couple de rappel vers la coaxialité du frotteur 31 avec ledit câble f.

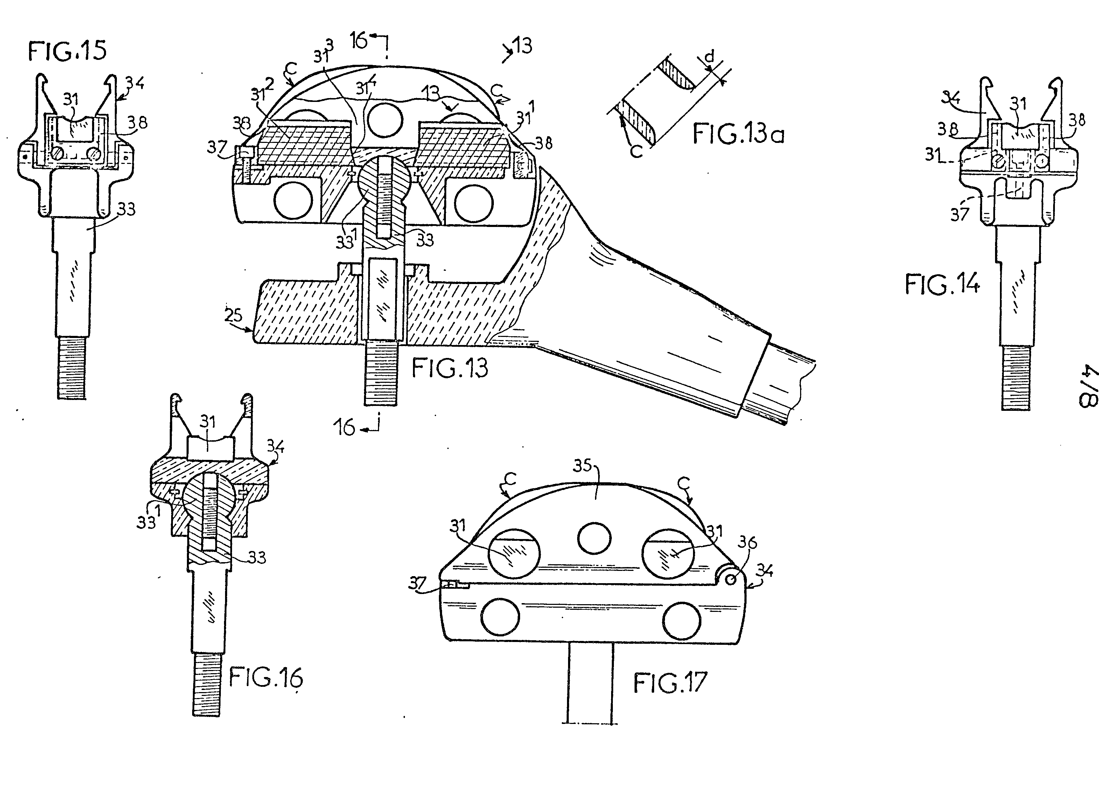

Il est important de considérer que la convexité d'une des joues $30^1$ dépasse en hauteur celle de l'autre joue $30^2$ aux extrémités du porte-frotteur 30, suivant C, comme illustré figures 9 et 12a, en constituant ainsi deux proéminences formant "cornes".

Cette disposition permet d'éliminer les éventuels points d'équilibre qui pourraient se produire lors de la mise en pression des sommets des ailes du porte-frotteur 30 sur le câble aérien f. On note également qu'il est prévu par rapport à l'articulation horizontale, un léger déséquilibre de masse, de telle façon que les extrémités des joues $30^1$ - $30^2$ se présentent sous forme de deux "cornes" dissymétriques entre lesquelles il est plus aisé de faire pénétrer la ligne.

Dans la réalisation en variante illustrée figures 13, 13a, 14, 15, 16 et 17, l'axe vertical 33 est fixé sur la tête à frotteur en matière souple ou non, tandis que son extrémité supérieure forme une rotule $33^1$ sur laquelle s'emboîte et s'articule le porte-frotteur 34 réalisé avec joues dissymétriques établies comme ci-dessus, et maintenu par circlips. Ce dernier reçoit le frotteur 31.

Il est important de considérer que le frotteur 31 constitue deux éléments espacés $31^1$ - $31^2$ de contact sur le câble f, de manière à améliorer la qualité de l'interférence dans les courbes.

Chaque élément distinct $31^1$ - $31^2$ en graphique de préférence, est établi avec une faible longueur L comparativement à sa largeur l. A titre indicatif, cette largeur l mesurée perpendiculairement au câble, peut être du même ordre que la longueur L.

Dans la réalisa/tion de la figure 9, le frotteur 31 est centré et fixé d'une manière amovible par l'intermédiaire d'un ressort 32 en épingle, dont les branches latérales prennent appui sur des épaulements $31^3$ du porte-frotteur, et la base, sur des faces pentées et opposées $31^4$, en vue d'assurer son maintien dans le logement correspondant du porte-frotteur 30, tout en autorisant son rapide dégagement pour son changement.

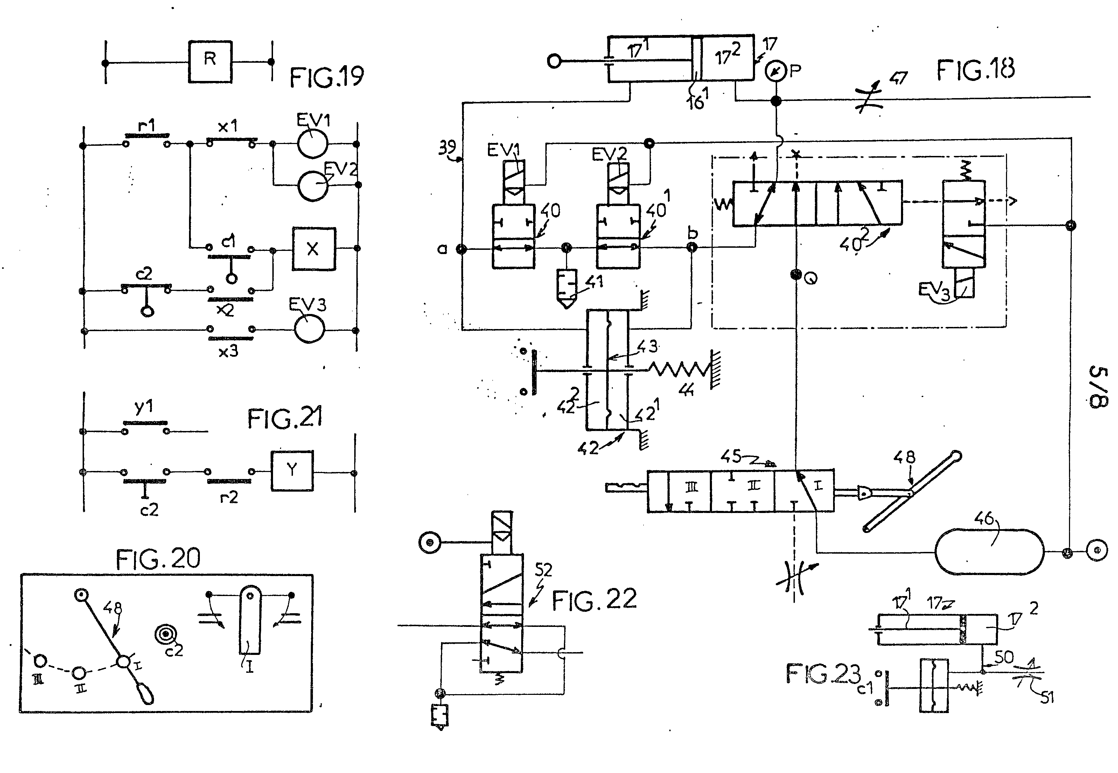

Dans la réalisation de la figure 17, le frotteur 31 est maintenu transversalement par l'intermédiaire d'un couvercle rabattable 35 constituant le profil supérieur du porte-frotteur 34. Ce couvercle 35 s'articule à l'une de ses extrémités formant charnière, autour d'un axe 36, tandis que son extrémité opposée est maintenue par une vis 37.

Le frotteur 31 est en outre positionné axialement et maintenu longitudinalement d'une manière souple sur le porte-frotteur 34, par l'intermédiaire de deux lames-ressorts extrêmes 38 découpées en forme de U.

Dans la réalisation des figures 24 et 29, les éléments alignés et espacés 76 du frotteur, sont fixés dans le porte-frotteur 77, comme indiqué ci-avant, suivant un plan d'appui inférieur surbaissé passant par la partie médiane et méplate $78^1$ de l'axe horizontal 78 constituant l'articulation dudit porte-frotteur 77 par rapport à son support 79 rotatif dans un plan vertical. Un moyen amortisseur tel un bloc méplat 80 en matière souple, caoutchouc par exemple, repose sur la partie méplate $78^1$ de l'axe horizontal 78, ou encore chevauche ce dernier au moyen d'une cavité et permet de par ses faces transversales opposées, l'appui souple sur les faces pentées extrêmes $76^1$ formées à la base ou sur toute la hauteur de la face extrême de chaque élément 76.

Une lame intercalaire 81 de section transversale en U, se centre et prend appui de par ses branches latérales $81^1$, sur les dégagements épaulés $77^1$ des joues du porte-frotteur 77, pour maintenir et exercer un appui sur le bloc 80 intercalé entre les éléments 76. Cette disposition permet ainsi d'obtenir de par le bloc 80, une liaison souple longitudinale entre les éléments 76, pour amortir les chocs longitudinaux dus aux passages du frotteur sur les supports, ou légers défauts de dressage du câble aérien.

Il est bien évident que le moyen amortisseur peut être réalisé sous forme d'une lame mince 82, comme illustré figure 30, directement placée en pression entre les faces extrêmes perpendiculaires ou pentées des éléments 76, et sur toute leur hauteur. Dans ce cas, les éléments frotteurs 76 autorisent le maintien de l'axe 78. Il est bien évident que ces moyens de fixation du frotteur 31 ou 76, s'appliquent dans le cas de porte-frotteur avec axe disposé ou non à leur partie médiane et avec joues verticales symétriques ou dissymétriques.

Selon l'invention, il est également prévu un moyen mécanique d'orientation à distance et de positionnement du porte-frotteur 30 , 34 ou 77, autour de son axe vertical, commandé de l'intérieur de la cabine du véhicule et destiné à assurer le rappel automatique dudit porte-frotteur dans l'axe du câble aérien f, en vue de faciliter le reperchage. A cet effet, ce dispositif est établi à partir d'une chape 83 montée à libre rotation verticale de par son axe, sur le support $83^1$ de la tête de perche et dont la partie supérieure autorise la fixation de l'axe horizontal 78 du porte-frotteur. Une bague inférieure indépendante 84 est également montée à libre rotation sur l'axe vertical de la chape 83, pour recevoir extérieurement sur sa périphérie, deux axes 85 diamétralement opposés et destinés à permettre l'oscillation des extrémités des branches inférieures $86^1$ d'un positionneur 86 dont l'extrémité opposée constitue coaxialement un profil ouvert auto-centreur $86^2$ en V, formant également guidon de visée. D'autres branches relient les branches $86^1$ et $86^2$ en formant des profils 87 de renforcement, débordant en hauteur.

Les extrémités des branches inférieures $86^1$ se prolongent pour former des doigts symétriques 88 légèrement courbés vers l'intérieur et dont l'écartement E est sensiblement supérieur à l'épaisseur P formée entre deux bossages méplats $83^2$ établis sur la périphérie de la chape 83. De la même façon, deux ergots 89 débordent intérieurement et transversalement des branches $86^1$ pour chevaucher la section méplate extrême de la tête $83^1$,mais uniquement lorsque le guidon occupe la position basse.

La bague inférieure 84 autorise également la fixation extérieure de l'extrémité d'une lame-ressort 90 s'étendant librement vers le bas, à l'arrière de la tête de perche $83^1$, en formant successivement un profil arrondi et une partie infé-

rieure rectiligne $90^1$ dont l'extrémité permet la fixation d'une butée 91 sur laquelle prend appui l'extrémité d'une gaine fixe 92 avec câble de commande 93 commandé directement par vérin depuis l'embase de perche. Ce câble 93 est accouplé en bout à une patte 94 montée sur une entretoise reliant les branches $86^1$. Un ressort à boudin 95 intercalé entre la patte 94 et la butée 91, assure de par sa détente, la remontée du guidon 86 lorsque le câble 93 est détendu.

Lors du reperchage s'effectuant par la remontée lente de la perche 9, par suite de la purge du vérin 17 et après déplacement en rotation de la perche 9 par l'intermédiaire du vérin 24, comme indiqué précédemment, pour amener sa tête sensiblement dans la zone du câble $f$ qui n'est pas forcément dans l'axe du véhicule, le câble 93 est relâché par l'intermédiaire de son vérin, pour permettre de par la détente du ressort 95, la remontée du positionneur 86. Ce dernier de par ses branches $86^2$ en forme de V, se centre facilement et visuellement sur le câble f en tournant au fur et à mesure de sa montée, par suite de la libre rotation de la bague 84, de manière à occuper en fin de course, une position axiale parallèle audit câble f.

Le déplacement en hauteur du guidon 86 permet également le basculement des doigts 88 autour des axes 85 qui s'engagent progressivement entre les bossages méplats $83^2$ de la chape 83, en l'obligeant à tourner et par conséquent, à amener le porte-frotteur 77 dans l'axe dudit câble f, en vue du reperchage. Après reperchage, le câble 93 est sollicité en tension, de manière à commander le pivotement vers le bas du guidon 86 autour des axes 85. Les ergots 89 s'engagent alors sur la section méplate de la tête $83^1$ pour permettre d'une part le verrouillage axial dudit guidon 86 par rapport à la dite tête de perche $83^1$, et d'autre part, le dégagement des doigts 88 par rapport aux bossages méplats $83^2$ de la chape 83, de manière à la déverrouiller circulairement pour permettre sa libre rotation indépendante par rapport à la bague 84. Il est important de considérer que la lame-ressort 90 permet de par sa position et sa souplesse, d'assurer l'effacement du guidon en position haute ou basse, en cas d'interférence avec des obstacles, en éliminant ainsi les risques de rupture accidentelle.

Toutefois, il faut noter que la butée 91 peut éventuellement être fixée sur la face inférieure du support de la tête de perche lorsque cette dernière est réalisée en matière souple résistante.

Il est bien évident que ces dispositions décrites, prises ensemble ou séparément, peuvent s'appliquer à tout type de tête de perche et de porte-frotteur.

Selon ces dispositions décrites, il convient d'analyser le fonctionnement de cet ensemble de prise de courant. On considère à cet effet, que le vérin 17 est relié aux chambres internes opposées $17^1$ et $17^2$ disposées de part et d'autre du piston $16^1$ de commande, par l'intermédiaire d'une canalisation 39 qui traverse des distributeurs d'air comprimé 40 - $40^1$ et $40^2$ dans le cas d'alimentation pneumatique, tandis qu'un filtre 41 permet de compenser les légères différences de variation de volume entre cesdites chambres. Un détecteur à membrane 42 est en outre également intercalé dans la canalisation 39, en vue d'être sollicité en cas de déperchage rapide, créant une brusque dépression entre les chambres $17^1$ et $17^2$, pour commander un contact électrique autorisant, dans un premier temps, le rabattement de la perche 9 vers le bas, de par le vérin 17, et son positionnement axial et longitudinal par rapport au véhicule, par la mise en pression du vérin 71 ou 74, ou encore par l'intermédiaire du galet 10 roulant sur la piste 11.

Dans un deuxième temps, la mise en pression du vérin 17 provoque également l'alimentation du vérin 24 qui agit sur la fourchette 23 pour le déplacement longitudinal de la roue 20 qui s'embraye avec la couronne conique 19.

Dans un troisième temps, l'alimentation des vérins 17 et 24 est arrêtée, et le vérin 17 est purgé à débit réduit pour assurer de par les ressorts 12, la remontée lente de la perche 9 en combinaison avec sa rotation horizontale obtenue par l'intermédiaire du moteur électrique M mis en fonctionnement par un interrupteur I et pouvant agir dans les deux sens de rotation, suivant des vitesses variables, en vue du reperchage, et également avec la commande de remontée du positionneur 86 pour le positionnement haut du porte-frotteur. De ce fait, le frotteur 31 peut être placé directement sur le câble aérien f, directement depuis la cabine du conducteur qui dispose à cet effet, d'un moyen optique lui permettant de contrôler ainsi le reperchage.

Dans un quatrième temps, la purge complète des vérins 17 et 24 intervient et permet le contact parfait du frotteur 31 sur le câble f, le déplacement opposé de la fourchette 23 en vue du débrayage de la roue 20, et enfin la mise en tension du câble 93 pour le pivotement vers le bas du positionneur 86.

Les figures 18 et 23 illustrent non limitativement et seulement à titre indicatif, des schémas électriques de fonctionnement.

La coupure électrique résultant d'un déperchage est détectée par un relais R alimenté directement par le réseau de distribution et temporisé pour retarder son enclenchement en fonction des paramètres des autres accessoires. Les contacts du relais R permettent d'alimenter sous une basse tension, les différents organes nécessaires à la commande des éléments de puissance.

L'action du relais R a pour conséquence de fermer son contact r1, en vue de l'alimentation des électrovalves $EV^1$ et $EV^2$, en vue de la commande des distributeurs 40 – $40^1$ qui ferment la libre circulation de l'air entre les chambres $17^1$ et $17^2$ du vérin pneumatique 17. Le contact r1 est monté en série avec un contact x1 normalement fermé au repos, et relatif à un relais X.

Cette perte de contact due au déperchage, s'accompagne d'un déplacement du piston du vérin 17 en créant une pression dans la chambre $42^1$ et une dépression de la chambre $42^2$ du détecteur 42 avec membrane 43 de séparation desdites cham-

- 19 -                          0030906

bres.

L'effort de pression dans la chambre $42^1$ déforme élastiquement la membrane 43 qui agit mécaniquement sur un contact C1 rappelé par ressort 44. La fermeture du contact C1 provoque l'excitation du relais X qui s'auto-alimente par son contact x2. L'alimentation du relais X a pour effet d'ouvrir le contact x1 coupant conséquemment l'alimentation des électrovalves $EV^1$ et $EV^2$ de commande des distributeurs 40 et $40^1$, pour autoriser de nouveau la libre circulation de l'air entre les chambres $17^1$ et $17^2$ du vérin 17. L'alimentation du relais X a également pour effet de fermer un autre de ses contacts x3 qui assure la commande d'une électrovalve $EV^3$ qui pilote le distributeur $40^2$.

Le distributeur $40^2$ assure la mise à l'air libre des chambres $42^1$ et $42^2$ à-travers les distributeurs 40 et $40^1$ (figure 18), ainsi que la mise sous pression de la chambre $17^2$ du vérin 17 au-travers d'un distributeur 45, à point milieu fermé, avec une capacité 46 en série sur le réseau du fluide. La perche 9 se trouve donc rabattue vers le bas, en combinaison avec son positionnement axial et longitudinal par rapport au véhicule. Le cycle de rattrapage automatique est terminé, la chambre $17^2$ est toujours sous pression, et le vérin 24 est alimenté au-travers d'un limiteur de débit réglable 47, par la canalisation $39^1$. Une manette 48 disposée dans le poste de pilotage du véhicule est orientée en position neutre II du distributeur 45, pour isoler le système de l'alimentation via la capacité 46.

La manette 48 en position III du distributeur 45, permet la purge du vérin 17 à débit réduit, par l'étrangleur 49, pour la remontée lente de la perche 9, son orientation par l'interrupteur I, et en fin de course la commande du positionneur 86. Le relais R est excité, son contact r1 étant de nouveau en position ouverte.

On note que la purge complète du vérin 17 par la manette 48, en psotion III du distributeur 45, assure le contact total du frotteur sur le câble f, et permet également la purge du vérin 24 (figure 18) qui revient en position initiale (figure 2) débrayant la couronne conique 19, tandis que le positionneur 86 est dégagé vers le bas.

Une action sur un bouton poussoir C2, à partir de l'intérieur du poste de pilotage du véhicule, coupe l'auto-alimentation x2 du relais X dont les contacts x1 et x3 passent respectivement en position fermée et ouverte (figure 19).

Il est également prévu, comme montré figure 21, pour éviter toute fausse manoeuvre ou maladresse, le bouton poussoir C2 pouvant être actionné avant que le frotteur 31 ait rétabli le contact (ouverture de r1), de monter en série avec C2 un autre contact r2 du relais R pour l'alimentation d'un relais Y qui coupe le relais X par un contact y1 relié au contact d'auto-alimentation x2 dudit relais X.

De nombreuses variantes concernant le schéma de puissance pneumatique peuvent être introduites, sans pour cela sortir du cadre de l'invention.

Par exemple, comme illustré figure 23, on peut utiliser uniquement la chambre $17^2$ du vérin 17, agissant avec seulement la chambre $42^1$ du distributeur 42. L'unique tube de liaison 50 entre les deux chambres $42^1$ et $17^2$ reçoit un piquage muni d'un limiteur de débit 51. Dans ce cas, seules les variations rapides (déperchage) sont détectées par la membrane 43 qui agit, comme indiqué précédemment, sur le contact C1.

Dans la variante de la figure 22, les deux distributeurs 40 et $40^1$ sont remplacés par un distributeur unique 52 raccordé aux points a et b du schéma de la figure 18.

Il faut considérer que pour manoeuvrer volontairement la perche 9 (changements volontaires de lignes d'alimentation, par exemple), il suffit de réunir les points P et Q (figure 18) avec un tube muni d'une vanne dont l'ouverture correspond à la manoeuvre volontaire de la perche avec le levier 48. Dans ce cas, il est souhaitable de placer le levier 48 en position II, avant d'ouvrir la vanne située entre
les points P et Q.

Revendications

1. Prise de courant à déperchage et reperchage automatiques pour véhicules à traction électrique, notamment les trolleybus, comportant une plateforme (1) se fixant axialement sur le toit au moyen d'isolateurs (2) et d'amortisseurs (3) avec des axes verticaux respectivement pour la libre rotation d'un support (6) sur lequel est montée la base de la perche (9) avec moyen de rappel par ressort à boudins (12) sur le câble aérien (f), et vérin (17) dont la mise en pression en cas de déperchage accidentel assure l'abaissement de ladite perche (9) avec moyen de centrage suivant l'axe longitudinal du véhicule, caractérisée en ce qu'un dispositif de commande en rotation de la perche (9), dans les deux sens, en vue de son centrage dans l'axe du véhicule, agit après déperchage et lors de son abaissement, par l'intermédiaire d'un vérin (71) avec tiroir mobile (66) coopérant avec une came (65) solidaire de la couronne rotative (19) porte-perche (9) ; qu'un dispositif de commande par vérin auxiliaire (24) moteur (M) et réducteur, fixé sur la plateforme, autorise l'embrayage de la couronne rotative (19) pour la commande en rotation de la perche (9), afin de permettre lors de sa remontée par le vérin (17), le reperchage de l'intérieur du véhicule ; qu'un moyen de commande permet l'orientation du porte-frotteur (77) monté en bout de la perche (9), dans l'axe du câble aérien (f), quel que soit le positionnement angulaire de ladite perche (9), avec guidon positionneur (86) escamotable, commandé lors du reperchage ; qu'une tête à frotteur (25) (53) en matière souple ou rigide, est montée à articulation horizontale et éventuellement combinée avec un axe vertical anti-lacet, en bout de la perche (9) avec moyens amortisseurs ; qu'un porte-frotteur articulé par rapport à ladite tête, est établi avec des joues symétriques ou dissymétriques en déséquilibre de masse ; qu'un frotteur(31) en deux parties indépendantes $(31^1)$ $(31^2)$ dimensionné est disposé en alignement sur le porte-frotteur par l'intermédiaire de moyens souples de fixation longitudinale dans l'axe du câble aérien (f).

2. Prise de courant selon 1, caractérisée en ce que le dispositif de commande en rotation de la perche (9), en vue de son centrage dans l'axe du véhicule lors de son abaissement, comprend une came (65) disposée sur la couronne (19) du dispositif de commande en rotation, avec des faces latérales en forme de V, orientées dans l'axe longitudinal de la perche (9), pour autoriser l'appui de galets (68) d'un étrier mobile (66) se déplaçant axialement par galets (69), sur des guides (67) fixés sur le toit du véhicule, et commandé longitudinalement par le piston (70) d'un vérin (71) fixe, mis en pression simultanément avec le vérin (17) de commande de rabattement de ladite perche (9), après déperchage.

3. Prise de courant selon 2, caractérisée en ce qu'en variante, le dispositif de commande en rotation de la perche (9), en vue de son centrage dans l'axe du véhicule, lors de son abaissement, comprend un vérin (74) articulé en (75) dans l'axe du véhicule, de par son fût, pour agir par son piston (73), sur la couronne (19), en vue de son rappel circulaire en position axiale d'alignement de la perche (9).

4. Prise de courant selon 1, 2, 3, caractérisée en ce que le dispositif de commande en rotation de la perche (9) de l'intérieur du véhicule, en vue du reperchage et après abaissement et centrage pour l'amener en regard du câble aérien (f), est assuré par un moteur (M) électrique, pneumatique, hydraulique, à vitesse réduite et variable agissant en rotation dans les deux sens, pour entraîner, par l'intermédiaire d'un réducteur de vitesse, un arbre longitudinal (21) sur lequel est claveté à libre coulissement une roue conique (20), en vue de son embrayage ou débrayage par friction sur la couronne rotative (19) solidaire du support (6) par l'intermédiaire d'une fourchette (25) engagée dans une gorge (20$^1$) et montée en bout de la tige d'un vérin (24) solidaire de la plateforme (1) ; ledit vérin (24) étant mis en pression simultanément avec le vérin (17) assurant l'abaissement de la perche.

5. Prise de courant selon 4, caractérisée en ce qu'en variante, la roue (20) et la couronne (19) sont dentées pour engrener en permanence, tandis qu'un coulisseau entraîné en rotation par l'arbre longitudinal (21) et en translation par la fourchette (23) de la tige de vérin (24), coopère de par son nez conique muni d'une garniture de friction, avec l'alésage correspondant établi facialement dans l'épaisseur de la roue dentée.

6. Prise de courant selon 4 et 5, caractérisée en ce qu'en variante, le moteur (M) est directement accouplé de par son rotor, à la roue (20) en prise avec la couronne (19) en vue de la libre rotation dudit rotor lors des oscillations du dispositif de perche, et lorsque l'alimentation en énergie du moteur précité n'est pas assurée.

7. Prise de courant selon 1, caractérisée en ce que le moyen de commande d'orientation du porte-frotteur (77) dans l'axe du câble aérien (f), quelle que soit l'orientation angulaire de la perche (9) par rapport à l'axe du véhicule, comprend une bague inférieure (84) disposée librement en rotation sur l'axe vertical de la chape rotative (83) du porte-frotteur avec extérieurement des axes (85) opposés, pour l'oscillation des extrémités des branches (86$^1$) d'un guidon pivotant (86) auto-centreur, évasé en forme de V (86$^2$) pour chevaucher le câble aérien (f) en position haute, de manière à s'orienter circulairement et à se positionner perpendiculairement en entraînant en rotation la bague (84) ; des doigts (88) déportés transversalement et solidaires des branches inférieures (86$^1$) au droit de leur articulation, coopérant lors de leur pivotement vers le haut, correspondant à la position haute du guidon (86), avec un profil méplat de la base de la chape (83) du porte-frotteur (77), pour son entraînement en rotation et le positionnement circulaire dudit porte-frotteur (77) dans l'axe longitudinal dudit guidon (86), et par suite, du câble aérien (f), en vue de faciliter le reperchage ; des ergots (89) solidaires des branches (86$^1$) coiffant la section méplate de la tête (83$^1$), en vue du verrouillage en position axiale dudit guidon (86), lors de son pivotement vers le bas en position escamotée de dégagement circulaire de la chape (83) ; un moyen de commande à distance du pivotement du guidon (86) avec câble (93) commandé par vérin.

8. Prise de courant selon 7, caractérisée en ce qu'une lame-ressort (90) est fixée verticalement de par sa branche supérieure, sur la bague inférieure (84), tandis que l'extrémité opposée est solidaire d'une butée (91) d'une gaine fixe (92) dont le câble (93) la traversant est accouplé en bout à une patte (94) solidaire des branches (86$^1$) du guidon (86) ; un ressort à boudin (95) prenant appui sur la butée (91), assurant le rappel vers le haut du guidon (86) ; ladite lame-ressort (90) autorisant en cas de choc, l'effacement du guidon (86) en position haute ou basse, indépendamment de sa commande.

9. Prise de courant selon 8, caractérisée en ce qu'en variante, la butée (91) de la gaine fixe (92) est directement fixée sur le support (83$^1$) de la tête de perche.

10. Prise de courant selon 1, caractérisée en ce que la tête à frotteur (53) est montée à articulation autour d'un axe (54) horizontal, avec amortisseur intercalaire, sur un support (55), lui-même monté à l'avant ou à l'arrière en articulation sur un axe vertical (52) disposé en inclinaison entre les branches d'une chape (56) montée en bout de la perche (9), de manière à réduire les effets parasites dus aux lacets et aux virages.

11. Prise de courant selon 10, caractérisée en ce qu'en variante, la tête (25) solidaire de la perche (9), est réalisée en une seule partie en matière souple résistante, et forme au droit de sa section utile, une épaisseur profilée et amincie (25$^1$) pour agir par déformation et produire l'effet amortisseur ; un insert métallique (A) étant logé dans la matière pour éviter la désagrégation en cas de rupture accidentelle.

12. Prise de courant selon 10, caractérisée en ce qu'en variante, les articulations d'axes (26) (52) avec la tête (53) et le support (55), ainsi que le support (55) et la chape (56) disposés avec axes verticaux à l'avant ou à l'arrière, sont établies avec un faible dimensionnement et enrobées d'une matière souple formant renforts et protections, et dont l'épaisseur est fonction des efforts appliqués.

13. Prise de courant selon 12, caractérisée en ce qu'en variante la tête (53) en matière souple, solidaire de la perche (9), est formée d'inserts comprenant un tube extrême (54) avec en bout, une chape verticale et inclinée (55) sur laquelle s'articule autour d'axes (56), une fourchette (57) solidaire d'un support déporté (58), lui-même articulé horizontalement en (59) sur les branches d'un étrier (60) formant patte axiale ($60^2$) à son extrémité et recevant une plaque entretoise (61) munie d'une plaque inclinée (62) ; après moulage, la matière souple enrobant axialement l'ensemble des inserts articulés tout en constituant, outre la forme définitive de la tête (53), des dégagements latéraux opposés ($53^1$) disposés obliquement en regard de l'articulation verticale formée par les axes (56), et des dégagements verticaux en forme de cavités opposées ($53^2$ - $53^4$) avec âme de butée destinée à permettre la flexion horizontale et la butée au droit de l'axe (59) ; un profil supérieur ($53^7$) arrondi en forme de secteur sphérique formant protecteur du porte-frotteur, tout en comportant une entaille axiale ($53^8$).

14. Prise de courant selon 1, caractérisée en ce que le porte-frotteur (30) articulé verticalement sur la tête, est disposé dissymétriquement ou non par rapport à son axe horizontal (29).

15. Prise de courant selon 1 et 14, caractérisée en ce que le porte-frotteur (30) (34) comporte des joues verticales et dissymétriques ou non ($30^1$ - $30^2$), pentées intérieurement et transversalement en forme de V, et convexes suivant leur sommet, de façon dissymétrique, en formant ou non des cornes pour permettre, lors de la mise en pression verticale, le rappel dudit porte-frotteur (30) (34) dans l'axe dudit câble (f) ; en cas de position défavorable, le porte-frotteur précité pouvant être préparé ou non automatiquement par une position inclinée par rapport à son axe d'articulation horizontale (29) dans le cas de déséquilibre de masse.

16. Prise de courant selon 1, caractérisée en ce que chaque frotteur (31) comporte deux éléments espacés montés en alignement souple longitudinalement dans le porte-frotteur et entre lesquels s'engage le moyen d'articulation dudit porte-frotteur ; chaque élément (76) étant établi avec un rapport dimensionnel dont la largeur (l) mesurée perpendiculairement au câble (f), est du même ordre que la longueur (L).

17. Prise de courant selon 16, caractérisée en ce que le moyen d'articulation du porte-frotteur est disposé en hauteur selon une distance réduite par rapport à la face frottante du frotteur (31), par suite de son logement entre les portées espacées ($31^1$ - $31^2$).

18. Prise de courant selon 16, caractérisée en ce que les éléments (76) du frotteur sont emboîtés et fixés d'une manière amovible et souple longitudinalement dans ledit porte-frotteur, par l'intermédiaire d'un moyen élastique tel un ressort en épingle (32) dont les branches latérales prennent appui sur des épaulements du porte-frotteur précité et à la base, sur des faces pentées et opposées ($31^4$) formées par les extrémités des éléments dudit frotteur (31).

19. Prise de courant selon 18, caractérisée en ce que les éléments (76) de chaque frotteur sont reliés longitudinalement par un bloc (80) intercalaire, en matière souple, reposant sur une face méplate ($78^1$) de l'axe horizontal (78), ou encore chevauchant ce dernier qui est toujours disposé à une distance réduite par rapport à la surface frottante du frotteur, tandis que les faces transversales opposées dudit bloc (80) prennent appui sur les faces pentées extrêmes ($76^1$) formées à la base ou sur toute la hauteur de chaque élément (76) ; une lame intercalaire (81) en forme de U, prend appui par ses branches latérales ($81^1$), sur les dégagements épaulés ($77^1$) des joues du porte-frotteur (77), pour maintenir en hauteur le bloc (80).

20. Prise de courant selon 19, caractérisée en ce qu'en variante, les éléments (76) de chaque frotteur, sont reliés suivant leur hauteur, par une lame mince (82) en matière souple, tandis que les extrémités desdits éléments (76) prennent appui ou non sur l'axe horizontal (78).

21. Prise de courant selon 19, caractérisée en ce qu'en variante, les éléments de chaque frotteur sont fixés d'une manière amovible dans le porte-frotteur (34), au moyen d'un couvercle rabattable (35) articulé d'un côté sur ledit porte-frotteur (34) et maintenu du côté opposé, par vis (37); ledit couvercle (35) enchassant le frotteur (31) qui est positionné axialement et maintenu longitudinalement d'une manière souple à ses extrémités, par l'intermédiaire de deux lames-ressorts (38) en forme de U.

22. Prise de courant selon 14, 15, 17, caractérisée en ce qu'en variante, le porte-frotteur (34) est maintenu en hauteur par un circlips, pendant le temps d'échange du frotteur, dans le cas de son montage sur une rotule ($33^1$) d'un axe vertical fixe (33).

23. Prise de courant selon 1, caractérisée en ce que la mise en pression du vérin (17), lors de la commande de rabattement de la perche, assure également l'alimentation du vérin (71) de commande de positionnement axial de la perche, dans l'axe du véhicule, et du vérin (24) pour l'embrayage de la couronne (19) solidaire du support porte-perche (15), en vue de la commande en rotation pour le reperchage.

24. Prise de courant selon 23, caractérisée en ce qu'après l'arrêt de l'alimentation simultanée des vérins, le vérin supérieur (17) placé de telle façon que sa masse est située en opposition à la perche pour équilibrer les accélérations radiales, assure de par sa purge, la remontée de la perche (9), tandis que son orientation horizontale s'effectue par la mise en circuit indépendante du moteur (M) par le conducteur, de manière à permettre la mise en place du frotteur (31) sur le câble aérien (f) ; un moyen de la commande du guidon positionneur (86) relevé.

25. Prise de courant selon 23 et 24, caractérisée en ce qu'après le reperchage, la purge des vérins (17 - 24) permet d'une part le contact en pression du frotteur (31) sur le câble aérien (f), le déplacement de la fourchette (23) en vue du débrayage de la couronne (19) par éloignement de la roue conique (20) ou du coulisseau, et l'effacement vers le bas du guidon positionneur (86).

26. Prise de courant selon 1, 23, 24 et 25, caractérisée en ce que le poste de pilotage du véhicule comprend un tableau de commande avec notamment un levier de manoeuvre (48) pour la commande du distributeur (45), un interrupteur (I) pour la mise en route du moteur (M) et un bouton poussoir (C2) pour la remise à l'état initial des différents circuits après recyclage.

FIG.1

0030906

1/8

FIG.2

FIG.3

0030906

FIG. 4

FIG. 5

FIG. 6

FIG. 7

FIG. 8

FIG.9

FIG.10

FIG.11

FIG.12

FIG.12a

FIG.15

FIG.13a

34
31
38

38
37

33

31³
16
13
31⁴
C
31²
C
13
C
31¹
38
38
38

d
C

25

33¹
33

16

FIG.13

34
31
38
38
37
31

FIG.14

4/8

31
34

33¹
33

33

FIG.16

35
C
C
31
31
36
37
34

FIG.17

0030906

FIG.19

FIG.18

FIG.21

FIG.20

FIG.22

FIG.23

5/8

0030906

6/8

FIG.29

FIG.30

FIG.24

FIG.26

FIG.25

FIG.28

FIG.27

0030906

FIG. 31

FIG. 32

FIG. 33

FIG. 34

FIG. 35

FIG. 36

FIG.38

FIG.37

FIG.41

FIG.39

FIG.42

FIG.40

0030906

## RAPPORT DE RECHERCHE EUROPEENNE

Office européen
des brevets

Numéro de la demande

EP 80 42 0142

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica- tion concernée | |
| D | DE - B - 1 036 905 (BROWN, BOVERI) <br> * Colonne 1, lignes 1-9, 25-53; colonne 2, lignes 32-54; co- lonne 3, lignes 1-14, 43-70; colonne 4, lignes 1-50; co- lonne 5, lignes 21-35 * <br><br> -- <br><br> FR - A - 926 070 (GENNEVILLIERS) <br> * Page 2, lignes 4-17; page 3, ligne 87 - page 4, ligne 55 * | 1-4, 23-25 <br><br><br><br><br><br> 1,3,6 | B 60 L 5/14 <br> 5/16 <br> 5/08 |

**DOMAINES TECHNIQUES RECHERCHES (Int. Cl. 3)**

| | | | |
|---|---|---|---|
| | DE - B - 2 827 371 (DORNIER) <br> * Colonne 1, lignes 4-37; co- lonne 2, lignes 2-4, 45-55; colonne 4, lignes 3-47 * <br> & FR - A - 2 429 124 (DORNIER) <br><br> -- <br><br> DE - C - 242 270 (STEPHAN) <br> * Lignes 3-45 * <br><br> -- <br><br> FR - A - 821 435 (GENNEVILLIERS) <br> * Page 2, lignes 39-49; page 3, lignes 50-99 * | 1,4,7, 9 <br><br><br><br><br><br><br> 1,4 <br><br><br><br><br> 1,10, 22 | B 60 L 5/14 <br> 5/16 <br> 5/12 <br> 5/10 <br> 5/08 <br> 5/04 |

**CATEGORIE DES DOCUMENTS CITES**

X: particulièrement pertinent
A: arrière-plan technologique
O: divulgation non-ecrite
P: document intercalaire
T: théorie ou principe à la base de l'invention
E: demande faisant interférence
D: document cité dans la demande
L: document cité pour d'autres raisons

| | | | |
|---|---|---|---|
| | US - A - 1 411 893 (WHITTAKER) <br> * Page 2, lignes 68-78; figure 2 * <br><br> -- <br><br> US - A - 2 005 908 (SCHAAKE) <br><br> ./. | 1,14, 15 <br><br><br><br><br> 1,22 | |

&: membre de la même famille, document correspondant

| X | Le présent rapport de recherche a été établi pour toutes les revendications | |
|---|---|---|
| Lieu de la recherche <br> La Haye | Date d'achèvement de la recherche <br> 05-02-1981 | Examinateur <br> TIELEMANS |

OEB Form 1503.1   06.78

Office européen
des brevets

**RAPPORT DE RECHERCHE EUROPEENNE**

| Catégorie | DOCUMENTS CONSIDERES COMME PERTINENTS<br>Citation du document avec indication, en cas de besoin, des parties pertinentes | Revendica-tion concernée | CLASSEMENT DE LA DEMANDE (Int. Cl. ³) |
|---|---|---|---|
| | * Page 1, colonne de droite, lignes 21-36 *<br><br>-- | | |
| | FR - A - 905 484 (JACQUEMOND)<br>* Page 1, lignes 48-58; page 2, lignes 1-23, 58-80 *<br><br>-- | 1,22 | |
| D | FR - A - 1 062 348 (SECHERON)<br>* Page 1, colonne de droite, alinéas 3,4; page 2, colonne de gauche, alinéa 3; colonne de droite, alinéa 3 *<br><br>-- | 1,23-25 | DOMAINES TECHNIQUES RECHERCHES (Int. Cl. ³) |
| | GB - A - 403 925 (WESTINGHOUSE)<br>* Page 1, lignes 70-107; page 2, lignes 1-11, 78-95 *<br><br>-- | 1 | |
| | US - A - 1 347 239 (YANCEY)<br>* Page 1, ligne 57 - page 2, ligne 31; figure 2 *<br><br>-- | 7-9 | |
| | FR - A - 954 548 (WESTINGHOUSE)<br>* Page 4, lignes 38-50 *<br><br>-- | 12 | |
| | US - A - 2 185 269 (RYAN)<br>* Page 1, colonne de droite, lignes 3-22, 49-54 *<br><br>-- | 21,22 | |
| | FR - A - 896 525 (OERLIKON)    ./. | 21 | |

OEB Form 1503.2  06.78

Office européen
des brevets

**RAPPORT DE RECHERCHE EUROPEENNE**

Numéro de la demande

EP 80 42 0142

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | * Page 1, lignes 51-57; page 2, lignes 51-54 * | | |
| | -- | | |
| PE | EP - A - 0 015 854 (T.C.L.) | 1-4 | |
| | * Page 10, ligne 2 - page 11, ligne 20 * | | |
| P | & FR - A - 2 451 289 (T.C.L.) | | |
| | ---- | | |
| | | | **DOMAINES TECHNIQUES RECHERCHES (Int. Cl. 3)** |

OEB Form 1503.2   06.78